# EUROPEAN PATENT APPLICATION

(11) **EP 2 511 387 A2**
(43) Date of publication of application: **17.10.2012**
(21) Application number: 12163237.6
(22) Date of filing: 04.04.2012
(51) Int. Cl.: C21D 11/00, F27B 9/16, F27B 9/40, F27D 19/00

(54) **Method of setting temperature of continuous heating furnace and method of controlling furnace temperature**

(30) Priority: 11.04.2011 JP 2011087565
(71) Applicant: Nippon Steel Engineering Co., Ltd, Tokyo 141-8604 (JP); Nittetsu Plant Designing Corporation, Kitakyushu-shi Fukuoka 804-0002 (JP)
(72) Inventor: Tamaru, Koji, Fukuoka-ken (JP); Oishi, Takuya, Fukuoka-ken (JP)
(74) Representative: Vossius & Partner

(57) **Abstract**

A space from a charging hole to a discharge hole of a continuous heating furnace is divided into zones. A furnace temperature is assumed for each zone and a plurality of furnace temperature patterns are set. A metallization rate α^{OUT} at the discharge hole is calculated for each furnace temperature pattern, using the time functions of the metallization rate α and the carbon content rate β of a raw material calculated in advance using a test. The necessary amount of heat applied to the continuous heating furnace is calculated for the furnace temperature patterns in which the calculated metallization rate α^{OUT} is greater than or equal to a target value. The furnace temperature pattern which realizes the minimum necessary amount of heat applied is set as the optimal furnace temperature pattern. A fuel supplied to a burner is controlled based on the optimal furnace temperature pattern.

## Description

### BACKGROUND OF THE INVENTION

### [Field of the Invention]

The present invention relates to a method of setting the temperature of a continuous heating furnace that heats a raw material loaded on a moving hearth using a burner and performs a reduction treatment and a method of controlling the furnace temperature.
Priority is claimed on Japanese Patent Application No. 2011-087565, filed April 11, 2011, the contents of which is incorporated herein by reference.

### [Description of Related Art]

In order to reduce iron oxide included in steel waste, such as steel dust or fine ore, and reuse the iron oxide for a raw material for manufacturing iron, a process has been put to practical use which mixes steel waste with a carbon material to form a briquette (pellet), charges the briquette to a rotary hearth furnace, heats and reduces the briquette to manufacture a reduction product (DRI; direct-reduced iron), and captures and collects zinc from the steel waste including zinc (for example, Patent Document 1).

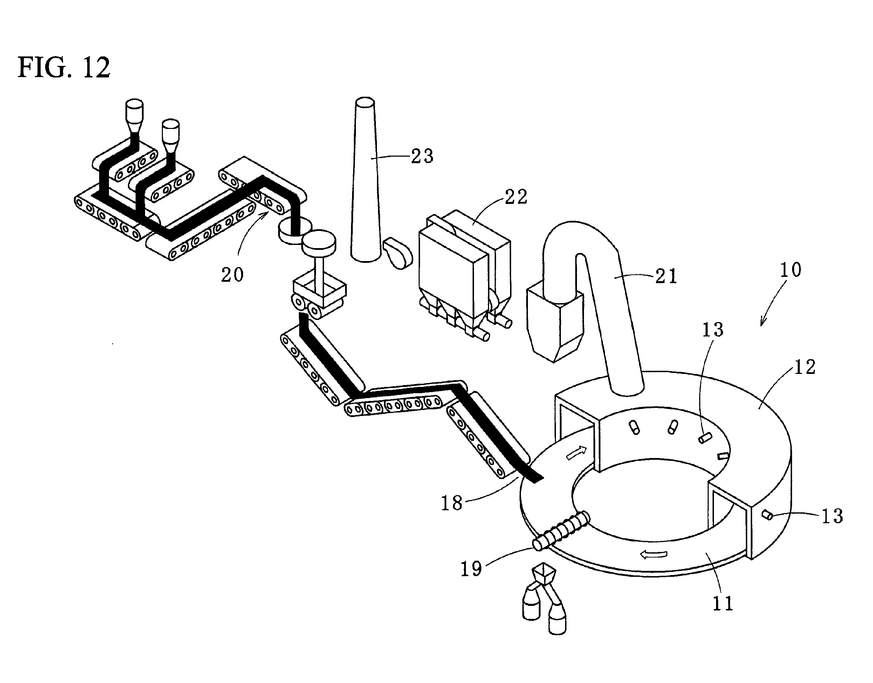

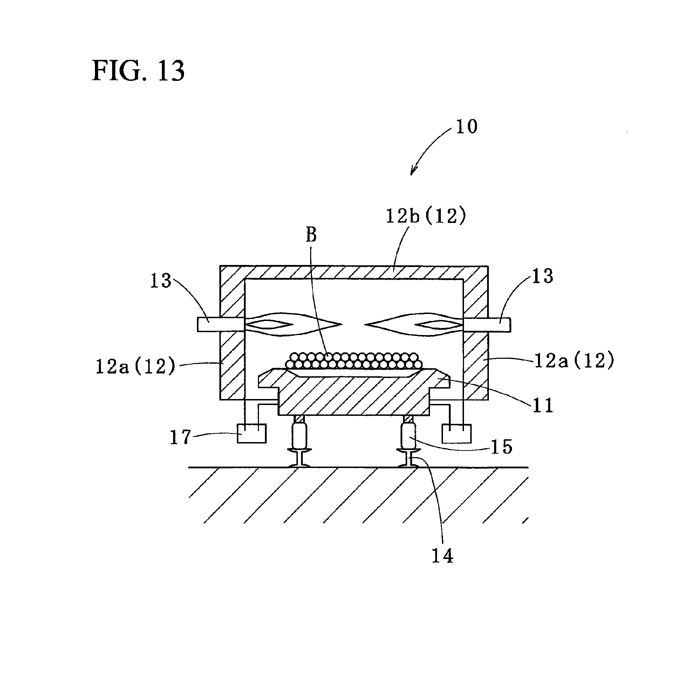

FIG. 12 shows a rotary hearth furnace 10 and related facilities and FIG 13 shows an example of the internal structure of the rotary hearth furnace 10. Iron dust and a carbon material, which is a reducing material, are mixed at a predetermined ratio by a raw material pre-processing unit 20 which is arranged in the front stage of the rotary hearth furnace 10 and are then pelletized to form a briquette B. The briquette B manufactured by the raw material pre-processing unit 20 is charged to the rotary hearth furnace 10 through a charging hole 18 of the rotary hearth furnace 10.

The rotary hearth furnace 10 includes a doughnut-shaped rotary hearth 11, a hood 12, and burners 13. A doughnut-shaped rotary hearth 11 is arranged in the horizontal plane. A hood 12 includes a circumferential wall portion 12a and a ceiling portion 12b which are respectively arranged along the inner and outer circumferences of the rotary hearth 11. Burners 13 are arranged at predetermined intervals on each circumferential wall portion 12a. In FIG. 12, the rotary hearth 11 is shown such that only half the rotary hearth 11 is covered with the hood 12, in order to illustrate the inside of the rotary hearth furnace 10. However, in practice, the entire rotary hearth 11 is covered with the hood 12. A rail 14 is provided immediately below the rotary hearth 11 so as to be arranged over the entire circumference of the rotary hearth 11 (see FIG. 13). The rotary hearth 11 is supported by the rail 14 through a wheel 15 and is moved in the hood 12 at a constant speed when the wheel 15 is rotated. In addition, water sealing means 17 is provided between the rotary hearth 11 and the circumferential wall portion 12a in order to isolate the inside of the hood 12 (furnace) from the outside air.

First, the briquette B charged from the charging hole 18 into the furnace with the movement of the rotary hearth 11 is heated in a heating zone at a temperature of 1000°C or more. In a high-temperature reduction zone, the reaction temperature of the briquette B reaches 1100°C or more and the reduction action of a zinc oxide or an iron oxide by contained carbon occurs. Zinc is vaporized by this reaction and is separated from the briquette B. Combustion gas and reaction gas become a counter flow to the rotary hearth 11 and are exhausted from an exhaust air duct 21 to the outside of the rotary hearth furnace 10. A dust collector 22 collects zinc from the gases and the gases are exhausted from a chimney 23 to the air. The reduced briquette B is discharged from a discharge hole 19 and is reused as a reduction product.

In the operation of the rotary hearth furnace, a metallization rate (the mass of Metal.Fe/the mass of Total.Fe) is used as one important index for evaluating the quality of a reduction product. In order to manufacture a high-quality reduction product, it is necessary to maximize the metallization rate. It is difficult to measure the metallization rate of the reduction product discharged from the rotary hearth furnace in real time in the present circumstances. Therefore, the reduction product is chemically analyzed for about one week.

Factors determining the metallization rate of the reduction product include the amount of carbon (initial carbon content rate) included in a raw material, such as a briquette or a pellet, a reduction time, and the internal temperature of a furnace. When the initial carbon content rate and the reduction time are constant, the reduction of the raw material becomes faster as the internal temperature of the furnace increases. When the internal temperature of the furnace and the reduction time are constant, the reduction of the raw material becomes faster as the initial carbon content rate increases.

The raw material before being charged to the rotary hearth furnace can be analyzed to calculate the initial carbon content rate among the factors. In addition, the reduction time can be calculated from the moving speed (rotation speed) of the rotary hearth. However, as described above, since it is difficult to measure the metallization rate of the reduction product in real time, it is difficult to verify whether an appropriate furnace temperature is set during an operation. Therefore, the temperature of the rotary hearth furnace is controlled based on the past operating experience. As a result, it is difficult to obtain the optimal furnace temperature for achieving a target metallization rate with the minimum necessary amount of heat.

### [Prior Technical Documents]

### [Patent Documents]

[Patent Document 1] JP-A-2007-298202

### SUMMARY OF THE INVENTION

### [Problems to be Solved by the Invention]

Since furnace temperature control according to the related art is PID control for monitoring the temperature of the furnace, the related art has a problem in that it is difficult to respond to a rapid change in the amount of raw material charged. For example, when the amount of material charged is temporarily increased, the absorption of heat is increased by a reduction endothermic reaction caused by the increased raw material. As a result, the internal temperature of the furnace is reduced. In many cases, the reduction in the temperature causes a deterioration in product quality (metallization rate).

The invention has been made in view of the above-mentioned problems and an object of the invention is to provide a furnace temperature setting method and a furnace temperature control method capable of achieving a target metallization rate with the minimum necessary amount of heat in a continuous heating furnace that heats a raw material loaded on a moving hearth using a burner and performs a reduction treatment. Another object of the invention is to provide a furnace temperature control method capable of responding to a rapid change in the amount of raw material charged.

### [Means for Solving the Problem]

In order to achieve the objects, according to a first aspect of the invention, there is provided a method of setting the temperature of a continuous heating furnace which heats a raw material loaded on a moving hearth using a burner and performs a reduction treatment. In the method, a space from a charging hole to a discharge hole of the continuous heating furnace is divided into zones, a furnace temperature is assumed for each of the zones, a plurality of furnace temperature patterns are set, and a metallization rate α^{OUT} at the discharge hole is calculated for each of the furnace temperature patterns. Then, among the furnace temperature patterns in which the calculated metallization rate α^{OUT} is greater than or equal to a target value, the furnace temperature pattern which realizes the minimum necessary amount of heat applied is set as the optimal furnace temperature pattern. The method includes the following steps:

(1) A time function α = f(t) of a metallization rate α and a time function β = g(t) of a carbon content rate β of the raw material are calculated, using a furnace temperature T of the continuous heating furnace and an initial carbon content rate β^{IN} of the raw material charged to the continuous heating furnace as parameters (where the metallization rate is the mass of Metal.Fe/the mass of Total.Fe, the carbon content rate is the mass of carbon in the raw material/the mass of the raw material, and t is a reduction time).
(2) A space from the charging hole to the discharge hole of the continuous heating furnace is divided into first to m-th zones (m is a natural number), a furnace temperature Tᵢ (i = 1, ..., m) is assumed for each of the zones, and a plurality of furnace temperature patterns including the furnace temperature T₁ of the first zone to the furnace temperature Tₘ of the m-th zone are formed.

(3) The following operation is performed on all of the formed furnace temperature patterns to calculate the metallization rate α^{OUT} at the discharge hole for each furnace temperature pattern. First, a metallization rate α1^{OUT} and a carbon content rate β1^{OUT} at the exit of the first zone are calculated using the metallization rate α^{IN} of the raw material and the initial carbon content rate β^{IN} of the raw material when the raw material is charged as a metallization rate α1^{IN} and a carbon content rate β1^{IN} at an entrance to the first zone, and the time functions α = f(t) and β = g(t) at the furnace temperature T₁ of the first zone and the initial carbon content rate β1^{IN}. Then, a metallization rate αi^{OUT} and a carbon content rate βi^{OUT} at the exit of an i-th zone is calculated, using a metallization rate αi-1^{OUT} and a carbon content rate βi-1^{OUT} at the exit of an (i-1)-th zone (i = 2, ..., m) as a metallization rate αi^{IN} and a carbon content rate βi^{IN} at an entrance to the i-th zone, and the time functions α = f(t) and β = g(t) at the furnace temperature Tᵢ of the i-th zone.
(4) The necessary amounts of heat applied to the continuous heating furnace is calculated for the furnace temperature patterns in which the calculated metallization rate α^{OUT} (a metallization rate αm^{OUT} at the exit of an m-th zone) is greater than or equal to a target value, and the furnace temperature pattern among the calculated necessary amounts of heat applied which realizes the minimum necessary amount of heat applied is set as the optimal furnace temperature pattern.

The object of the method of setting the temperature of the continuous heating furnace according to the first aspect is to calculate the optimal furnace temperature pattern, that is, the furnace temperature pattern which realizes the minimum necessary amount of heat applied among the furnace temperature patterns in which the metallization rate α^{OUT} at the discharge hole is greater than or equal to the target value. Therefore, it is also considered that the furnace temperature Tᵢ₋₁ of the (i-1)-th zone is different from the furnace temperature Tᵢ of the i-th zone. In this case, since the furnace temperatures are different from each other, it is difficult to use the time functions α = f(t) and β = g(t), which have been used in the (i-1)-th zone, in the i-th zone. Therefore, it is preferable that the method of setting the temperature of the continuous heating furnace according to the first aspect include the following steps.

(1) A relational expression β = h(α) between the metallization rate α and the carbon content rate β of the raw material is calculated using the furnace temperature T of the continuous heating furnace and the initial carbon content rate β^{IN} of the raw material charged to the continuous heating furnace as the parameters. (2) When the furnace temperature Tᵢ₋₁ of the (i-1)-th zone is different from the furnace temperature Tᵢ of the i-th zone, the relational expression β = h(α) at the furnace temperature Tᵢ which satisfies the relationship between the metallization rate αi^{IN} and the carbon content rate βi^{IN} at the entrance to the i-th zone is selected, and the initial carbon content rate βi^{IN} of the relational expression β = h(α) is calculated. (3) The time functions α = f(t) and β = g(t) satisfying the calculated initial carbon content rate βi^{IN} and the furnace temperature Tᵢ are selected, and the metallization rate αi^{OUT} and the carbon content rate βi^{OUT} at the exit of the i-th zone are calculated.

According to a second aspect of the invention, there is provided a method of controlling the temperature of a continuous heating furnace. The method includes controlling a fuel supplied to a burner of the continuous heating furnace based on the optimal furnace temperature pattern obtained by the method of setting the temperature of the continuous heating furnace according to the first aspect.

In the method of controlling the temperature of the continuous heating furnace according to the second aspect, the mass of a raw material charged to the continuous heating furnace may be measured, the position of the raw material in the continuous heating furnace may be tracked, and the fuel supplied to the burner which is close to the tracked position may be corrected based on the mass of the raw material.

In the first aspect of the invention, the space from the charging hole to the discharge hole of the continuous heating furnace is divided into zones, the furnace temperature is assumed for each of the zones, a plurality of furnace temperature patterns are set, and the metallization rate α^{OUT} at the discharge hole is calculated for each of the furnace temperature patterns. Then, among the furnace temperature patterns in which the calculated metallization rate α^{OUT} is greater than or equal to a target value, the furnace temperature pattern which realizes the minimum necessary amount of heat applied can be set as the optimal furnace temperature pattern.

In the second aspect of the invention, the mass of the raw material charged to the continuous heating furnace is measured, the position of the raw material in the continuous heating furnace is tracked, and the fuel supplied to the burner which is close to the tracked position is corrected based on the mass of the raw material. In this case, even when the amount of raw material charged is rapidly changed, the internal temperature of the furnace is maintained to be constant and it is possible to prevent a deterioration in product quality.

### [Effects of the Invention]

The furnace temperature setting method and the furnace temperature control method of the present invention are capable to achieve a target metallization rate with the minimum necessary amount of heat in a continuous heating furnace that heats a raw material loaded on a moving hearth using a burner and performs a reduction treatment. In addition, the furnace temperature control method of the present invention is capable to adapt to the rapidly change in an amount of raw material charged.

### BRIEF DESCRIPTION OF THE DRAWINGS

FIG. 1A shows an example of a time function α = f(t) of a metallization rate α and a time function β = g(t) of a carbon content rate β of a raw material.
FIG. 1B shows an example of a graph β = h(α) indicating the relationship between the metallization rate α and the carbon content rate β of the raw material.
FIG. 2 shows a list of the time function α = f(t) of the metallization rate α and the time function β = g(t) of the carbon content rate β of the raw material having a furnace temperature T and the initial carbon content rate β^{IN} of the raw material as parameters.
FIG. 3 shows an example of the list of graphs β = h(α) indicating the relationship between the metallization rate α and the carbon content rate β of the raw material having the furnace temperature T and the initial carbon content rate β^{IN} of the raw material as parameters.
FIG. 4A is a schematic diagram illustrating the zoning of a rotary hearth furnace.
FIG. 4B is a list showing an example of the furnace temperature pattern of a rotary hearth furnace.
FIG. 5A is a schematic diagram illustrating a method of setting the temperature of a continuous heating furnace according to an embodiment of the invention in FIG 2.
FIG. 5B is a schematic diagram illustrating a method of setting the temperature of a continuous heating furnace according to an embodiment of the invention in FIG.3.
FIG. 6 shows the time function α = f(t) of the metallization rate α and the time function β = g(t) of the carbon content rate β of the raw material when the furnace temperature of the first zone selected in STEP1 of FIG 5A is, for example, 800°C and the initial carbon content rate β^{IN} is 15 mass%.
FIGS. 7A shows the graphs β = h(α) indicating the relationship between the metallization rate α and the carbon content rate β of the raw material which are selected in STEP2 of FIG. 5B, and FIG. 7A shows a case in which data interpolation is not needed.
FIGS. 7B shows the graphs β = h(α) indicating the relationship between the metallization rate α and the carbon content rate β of the raw material which are selected in STEP2 of FIG. 5B, and FIG 7B shows a case in which data interpolation is needed.
FIG. 8 shows the time function α = f(t) of the metallization rate α and the time function β = g(t) of the carbon content rate β of the raw material which are selected in STEP3 of FIG. 5A.
FIG. 9 is a flowchart illustrating the procedure of the furnace temperature setting method.
FIG. 10 is a control block diagram illustrating a method of controlling the temperature of a continuous heating furnace according to a first embodiment of the invention.
FIG. 11 is a control block diagram illustrating a method of controlling the temperature of a continuous heating furnace according to a second embodiment of the invention.
FIG. 12 is a schematic diagram illustrating an example of a rotary hearth furnace and related facilities.
FIG. 13 is a schematic diagram illustrating an example of the internal structure of the rotary hearth furnace.

### DETAILED DESCRIPTION OF THE INVENTION

Hereinafter, example embodiments of the invention will be described with reference to the accompanying drawings for understanding the invention. As an example of a continuous heating furnace, a rotary hearth furnace 10 (see FIGS. 12 and 13) will be described in detail.

### [Method of setting furnace temperature]

The procedure of a method of setting the temperature of a rotary hearth furnace 10 which heats a raw material loaded on a rotary hearth 11 using a burner 13 and performs a reduction treatment will be described.

### (1) Tube furnace test

For example, a test or analysis using the temperature T of the rotary hearth furnace 10 and the initial carbon content rate β^{IN} of a raw material charged to the rotary hearth furnace 10 as parameters is performed to calculate the time function α = f(t) of the metallization rate α of the raw material, the time function β = g(t) of the carbon content rate β, and a relational expression β = h(α) between the metallization rate α and the carbon content rate β of the raw material and a database for the data is made. In this embodiment, α = f(t), β = g(t), and β = h(α) are calculated using the tube furnace test.

A tube furnace (not shown) is an electric furnace having a pipe-shaped internal structure and a heater is arranged in the tube furnace so as to surround a sample charged into the furnace. In addition, a thermocouple which measures the internal temperature of the furnace is inserted into the tube furnace. In the test, a pipe which is called a furnace tube is set in the furnace. Then, a sample is charged into the furnace tube and the furnace tube is heated by the heater while gas in the furnace tube is replaced with nitrogen gas. The reason why gas replacement is performed is that, when heating is performed in an air atmosphere, an oxide with a high-boiling point is generated since there is oxygen in the air and a chemical form is likely to be changed. Since nitrogen is inert gas and is less likely to react with other materials, the possibility of nitrogen causing an extra reaction is low.

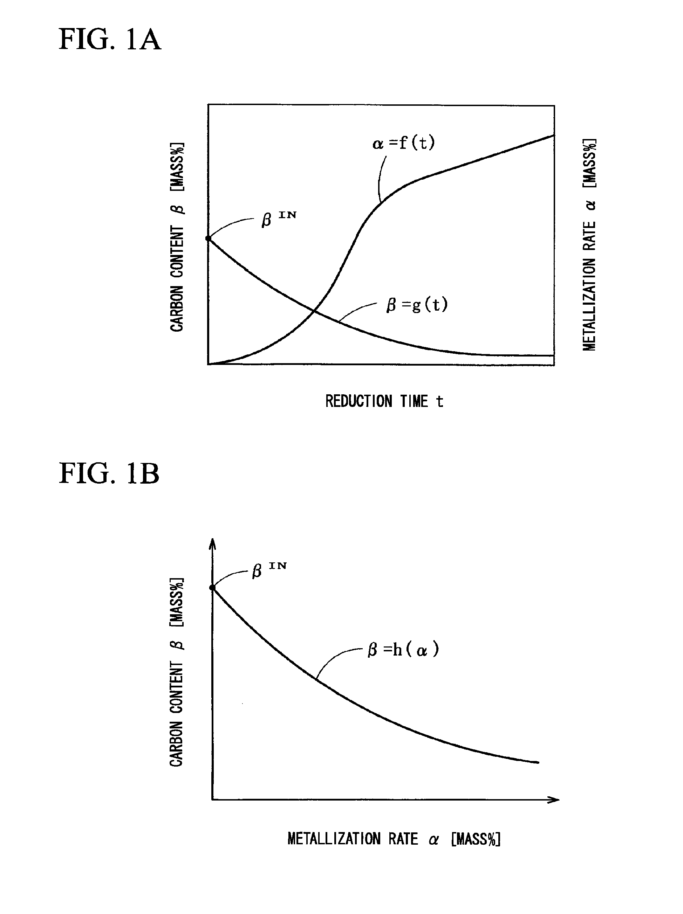

FIG 1A shows an example of the time function α = f(t) of the metallization rate α and the time function β = g(t) of the carbon content rate β of the raw material obtained using the tube furnace test. FIG. 1B shows an example of a graph β = h(α) indicating the relationship between the metallization rate α and the carbon content rate β of the raw material. The initial value of the metallization rate α is zero and increases as the reduction time t increases. The initial carbon content rate β^{IN} is the highest and the carbon content rate β is reduced as the reduction time t increases. The carbon content rate β is reduced as the metallization rate α increases.

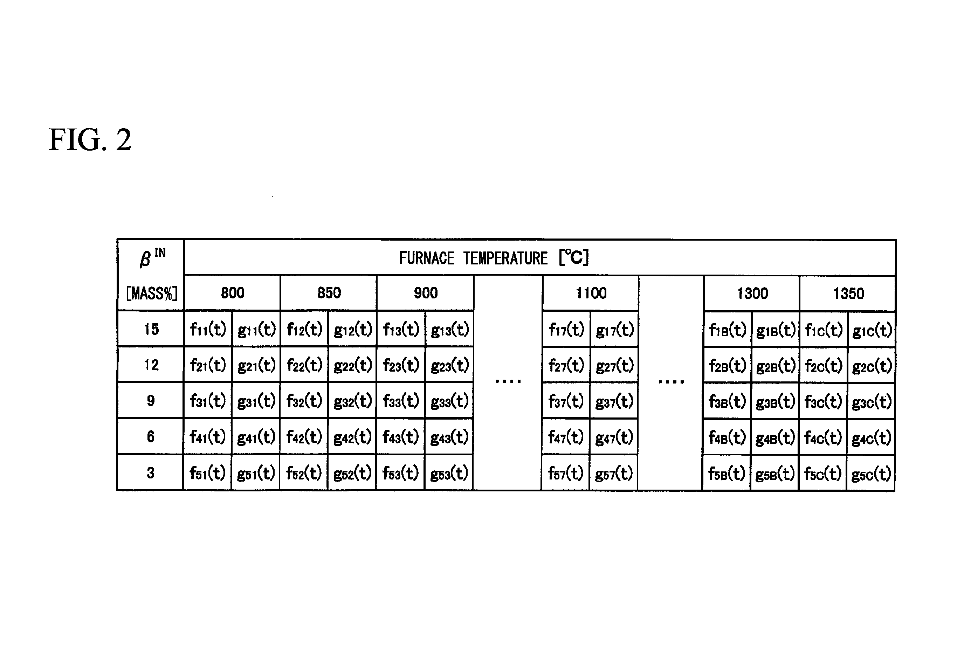

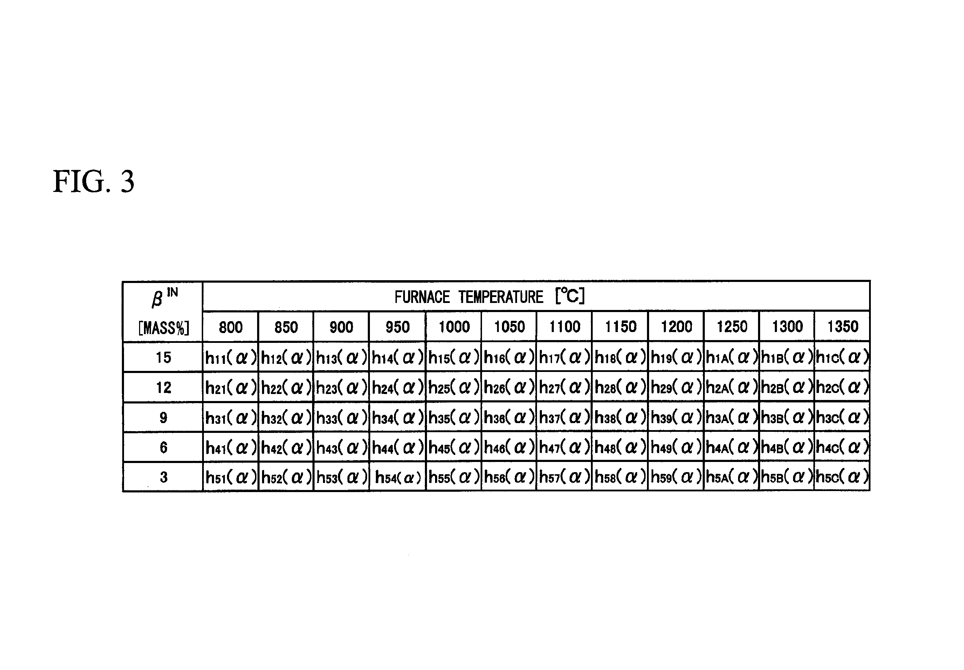

FIG 2 shows an example of the list of the time function α = f(t) of the metallization rate α and the time function β = g(t) of the carbon content rate β of the raw material obtained using the tube furnace test using the furnace temperature T and the initial carbon content rate β^{IN} of the raw material as parameters. FIG. 3 shows an example of the graph β = h(α) indicating the relationship between the metallization rate α and the carbon content rate β of the raw material. In this embodiment, the maximum value of the furnace temperature T is 800°C, the minimum value thereof is 1350°C, and a furnace temperature interval is 50°C. However, the values need to be appropriately changed depending on the execution conditions. The initial carbon content rate β^{IN} of the raw material also needs to be appropriately changed depending on the execution conditions.

### (2) Calculation of metallization rate α^{OUT} at discharge hole of rotary hearth furnace 10

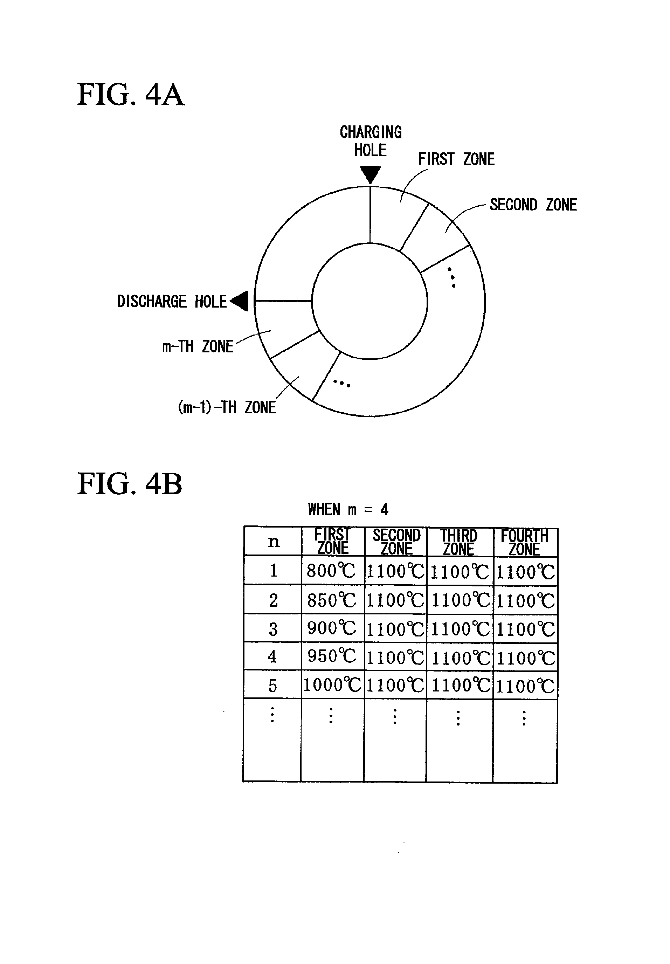

Next, a method of calculating a metallization rate α^{OUT} at the discharge hole of the rotary hearth furnace 10 based on data obtained using the tube furnace test will be described. As shown in FIG. 4A, a space from the charging hole to the discharge hole of the rotary hearth furnace 10 is zoned (divided) into a first zone to an m-th zone (m is a natural number). Then, a furnace temperature Tᵢ(i = 1, ..., m) is assumed for each of the zones and a plurality of furnace temperature patterns including the furnace temperature T₁ of the first zone to the furnace temperature Tₘ of the m-th zone are formed. For example, FIG. 4B shows an example of the furnace temperature pattern when the rotary hearth furnace 10 is divided into four zones. In FIG 4B, n indicates a furnace temperature pattern number.

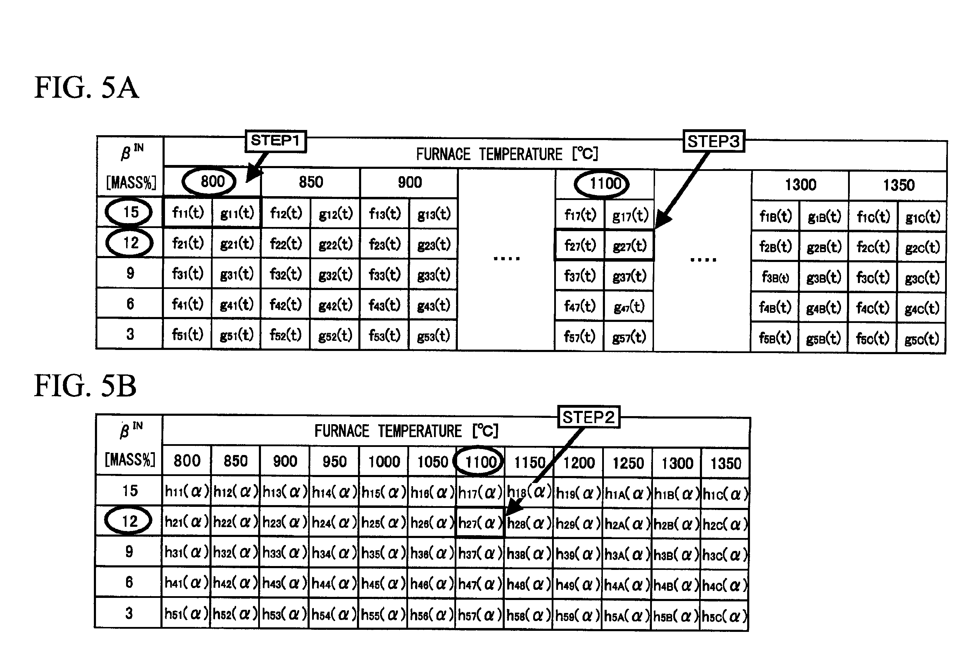

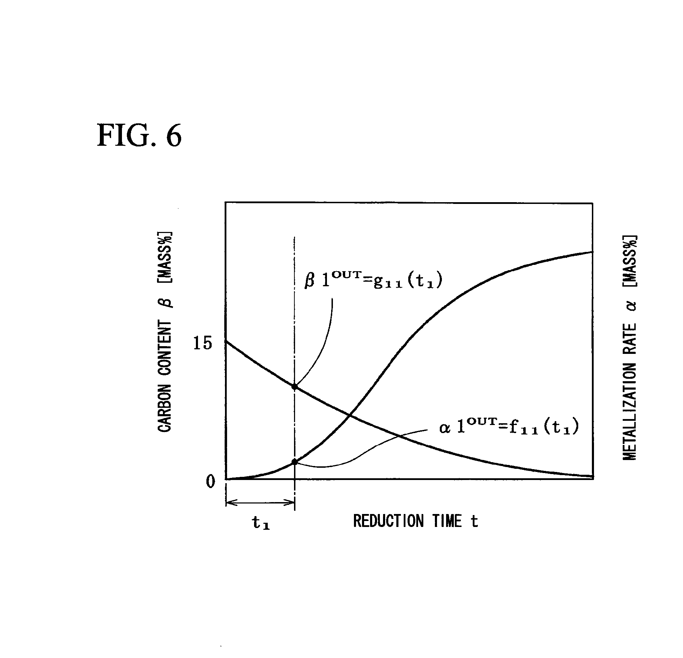

When the plurality of furnace temperature patterns are set, the metallization rate α^{OUT} and the carbon content rate β^{OUT} at the discharge hole are calculated for each of the furnace temperature patterns. Here, the furnace temperature pattern (n = 1) shown in FIG. 4B will be described as an example. First, the metallization rate α^{IN} (= 0 mass%) of the raw material and the initial carbon content rate β^{IN} (= 15 mass%) of the raw material when the raw material is charged are referred to as a metallization rate α1^{IN} and a carbon content rate β1^{IN} at the entrance (charging hole) to the first zone, respectively. Then, in the list of the time functions α = f(t) of the metallization rate α and the time functions β = g(t) of the carbon content rate β of the raw material having the furnace temperature T and the initial carbon content rate β^{IN} as parameters, the time functions f₁₁(t) and g₁₁(t) are selected which are obtained under the conditions of a furnace temperature T of 800°C and an initial carbon content rate β^{IN} of 15 mass% (see STEP1 of FIG. 5A). Then, as shown in FIG. 6, the time functions f₁₁(t) and g₁₁(t) are used to calculate a metallization rate α1^{OUT} and a carbon content rate β1^{OUT} at the exit of the first zone. The reduction time t₁ of the first zone is calculated by dividing the transportation distance of the first zone by the rotation speed of the rotary hearth.

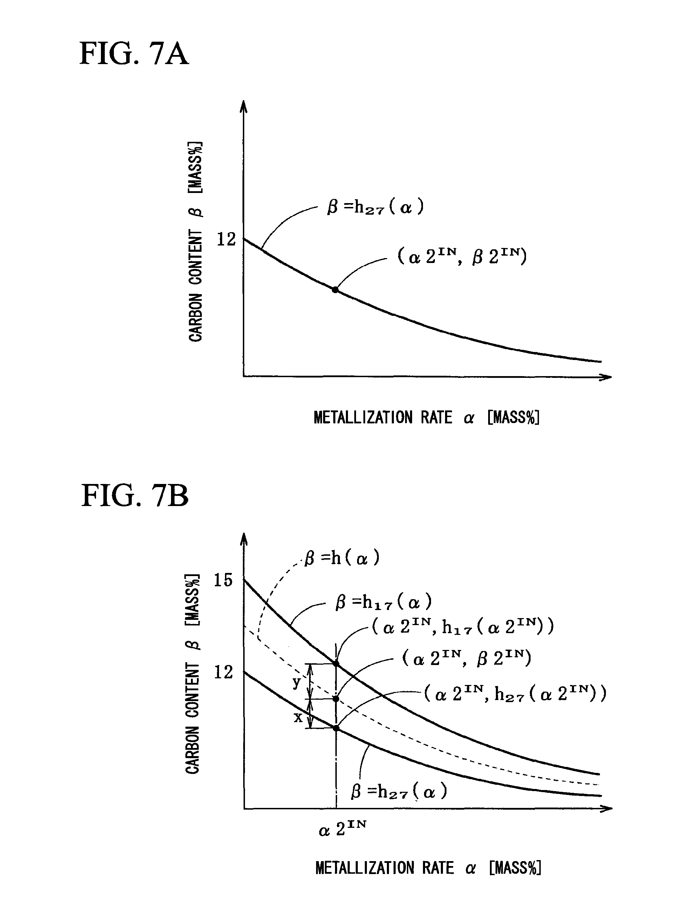

Then, the metallization rate α1^{OUT} and the carbon content rate β1^{OUT} at the exit of the first zone are used as a metallization rate α2^{IN} and a carbon content rate β2^{IN} at the entrance to the second zone and α = f(t) and β = g(t) at the furnace temperature T₂ of the second zone are used to calculate a metallization rate α2^{OUT} and a carbon content rate β2^{OUT} at the exit of the second zone. However, in this furnace temperature pattern, since the furnace temperature T of the second zone is 1100°C, it is not able to use the time functions f₁₁(t) and g₁₁(t) used in the first zone. Therefore, the graph β = h(α) indicating the relationship between the metallization rate α and the carbon content rate β of the raw material is used. Specifically, in the list of the graphs β = h(α) indicating the relationship between the metallization rate α and the carbon content rate β of the raw material, when the furnace temperature T is 1100°C, h(α) in which the metallization rate α is a2^{IN} and the carbon content rate β is β2^{IN} is selected. For example, h₂₇(α) is selected, and accordingly 12 mass% is obtained as the initial carbon content rate β^{IN} (see STEP2 of FIG. 5B and FIG 7A).

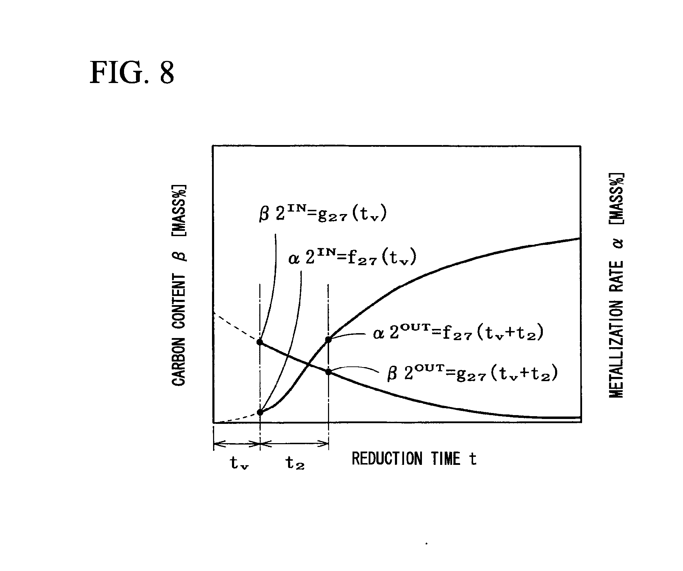

Then, the time functions α = f(t) and β = g(t) corresponding to h₂₇(α) are selected. Specifically, in the list of the time function α = f(t) of the metallization rate α and the time function β = g(t) of the carbon content rate β of the raw material having the furnace temperature T and the initial carbon content rate β^{IN} as parameters, time functions f₂₇(t) and g₂₇(t) are selected which are obtained under a furnace temperature T of 1100°C at an initial carbon content rate β^{IN} of 12 mass% (see STEP3 of FIG 5A). As shown in FIG. 8, in the time functions f₂₇(t) and g₂₇(t), the reduction time tᵥ from the charging of the raw material to the entrance to the second zone is different from t₁. A metallization rate α2^{OUT} and a carbon content rate β2^{OUT} may be obtained by calculating values after a reduction time t₂ from the metallization rate α2^{IN} and the carbon content rate β2^{IN} at the entrance to the second zone in the time functions f₂₇(t) and g₂₇(t) at the exit of the second zone. The reduction time t₂ of the second zone is calculated by dividing the transportation distance of the second zone by the rotation speed of the rotary hearth.

When h(α) in which the metallization rate α is α2^{IN} and the carbon content rate β is β2^{IN} is absent in the database, interpolation, such as linear interpolation, may be used. For example, as shown in FIG 7B, when β2^{IN} is between β = h₂₇(α) and β = h₁₇(α), β = h(α) in which α = α2^{IN} and β = β2^{IN} are established can be obtained as (h₂₇(α)×x+h₁₇(α)×y)/(x+y) by linear interpolation (where x = β2^{IN}-h₂₇(α2^{IN}) and y = h₁₇(α2^{IN})-β2^{IN}). In addition, similarly, α = f(t) and β = g(t) corresponding to β = h(α) can be obtained by linear interpolation.

For the third and fourth zones, similarly to the second zone, a metallization rate α4^{OUT} at the exit of the fourth zone is used as the metallization rate α^{OUT} at the discharge hole of the rotary hearth furnace 10. However, when the second zone and the third zone have the same furnace temperature T, the graph used in the second zone can be continuously used. Similarly, when the third zone and the fourth zone have the same furnace temperature T, the graph used in the third zone can be continuously used.

### (3) Setting of optimal furnace temperature

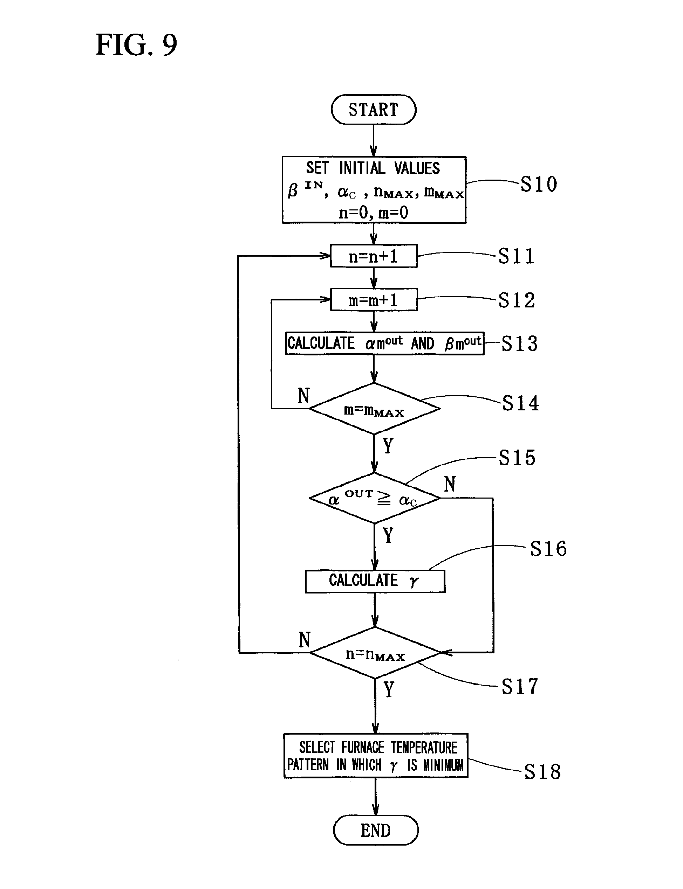

FIG. 9 is a flowchart illustrating the procedure of a furnace temperature setting method according to this embodiment. First, initial values, such as the initial carbon content rate β^{IN} of the raw material charged to the rotary hearth furnace 10, the target value α_{C} of the metallization rate, the number of furnace temperature patterns n_{MAX}, the number of zones m_{MAX}, are set (S 10). The metallization rate α^{IN} of the raw material when the raw material is charged is zero. Then, for the first furnace temperature pattern (n = 1) (S 11), the metallization rate αm^{OUT} and the carbon content rate βm^{OUT} at the exit of each of the first to m_{MAX}-th zones (S12 and S 14) are calculated (S 13). When the metallization rate α^{OUT} in the m_{MAX}-th zone is greater than or equal to the target value α_{C} of the metallization rate (S 15), the necessary amount of heat γ applied to the rotary hearth furnace 10 is calculated based on the furnace temperature Tᵢ (i = 1, ..., m_{MAx}) belonging to the first furnace temperature pattern (S 16). The above-mentioned operation (S12 to S 16) is performed on all of the furnace temperature patterns (S11 and S 17) and the furnace temperature pattern in which the calculated necessary amount of heat γ applied is the minimum is selected as the optimal furnace temperature pattern (S 18).

Next, a method of controlling the temperature of the rotary hearth furnace 10 will be described.

### [First furnace temperature control method]

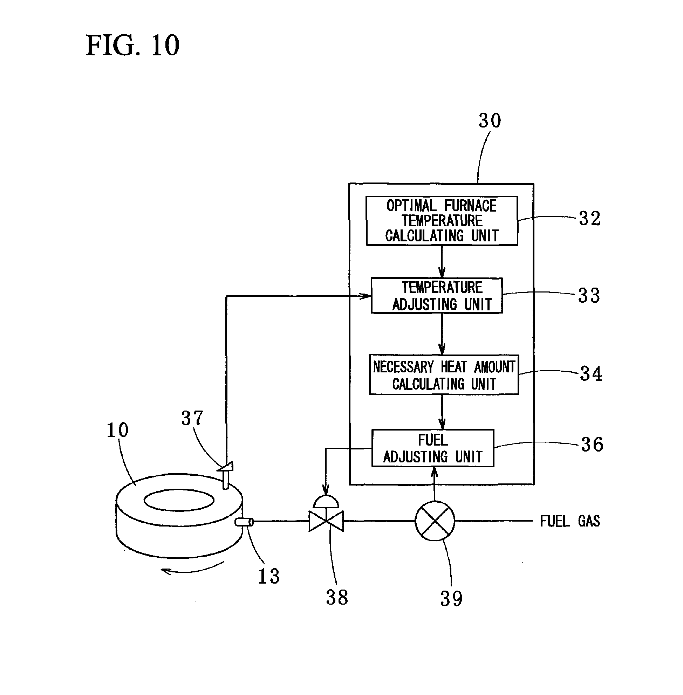

FIG. 10 is a control block diagram illustrating a first furnace temperature control method. A control device 30 which controls the temperature of the rotary hearth furnace 10 includes an optimal furnace temperature calculating unit 32, a temperature adjusting unit 33, a necessary heat amount calculating unit 34, and a fuel adjusting unit 36. In addition, the rotary hearth furnace 10 includes burners 13 and thermocouples 37 provided for each zone. The control device 30 is connected to all of the burners 13 and the thermocouples 37 provided in the rotary hearth furnace 10.

In the control device 30, the optimal furnace temperature calculating unit 32 sets the optimal furnace temperature pattern using the furnace temperature setting method. Then, the temperature adjusting unit 33 calculates the difference ΔT between the furnace temperature in the optimal furnace temperature pattern and the furnace temperature measured by the thermocouple 37. The necessary heat amount calculating unit 34 calculates the necessary amount of heat applied to the rotary hearth furnace 10 based on the difference ΔT and converts calculated necessary amount of heat applied into a fuel gas flow rate. Then, the fuel adjusting unit 36 controls a flow regulating valve 38 which adjusts the flow rate of fuel gas supplied to the burner 13, based on the difference between the fuel gas flow rate calculated by the necessary heat amount calculating unit 34 and the fuel gas flow rate measured by the flow meter 39.

### [Second furnace temperature control method]

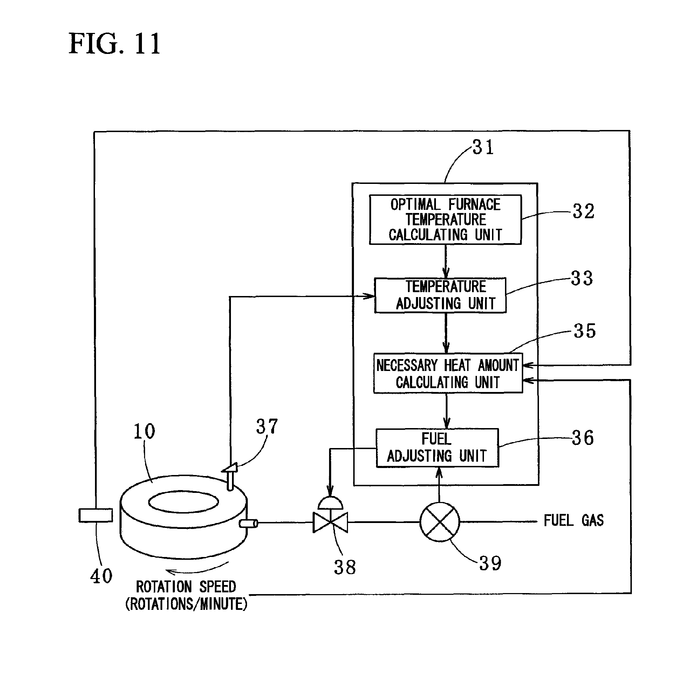

FIG. 11 is a control block diagram illustrating a second furnace temperature control method. The same components as those in the first furnace temperature control method are denoted by the same reference numerals and the description thereof will not be repeated. In the second furnace temperature control method, similarly to the control device 30 in the first furnace temperature control method, a control device 31 includes an optimal furnace temperature calculating unit 32, a temperature adjusting unit 33, a necessary heat amount calculating unit 35, and a fuel adjusting unit 36. A load cell 40 for measuring the mass of a charged raw material is provided at the charging hole 18 of the rotary hearth furnace 10 and the position of the raw material in the furnace is tracked based on the rotation speed of the rotary hearth 11.

In the control device 31, the mass data of the raw material measured by the load cell 40 and the tracking position data of the raw material are input to the necessary heat amount calculating unit 35. In the necessary heat amount calculating unit 35 corrects the fuel gas flow rate calculated based on ΔT which is based on the mass of the raw material to calculate the flow rate of fuel gas to be supplied to the burner close to the tracked position.

The embodiment of the invention has been described above, but the invention is not limited to the structure described in the embodiment. The invention includes other embodiments or modifications considered within the scope of the claims. For example, in the above-described embodiment, the rotary hearth furnace is used as an example. However, the hearth may have a linear shape.

While preferred embodiments of the invention have been described and illustrated above, it should be understood that these are examples of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

### [Description of Reference Numerals]

- 10:: Rotary hearth furnace
- 11:: Rotary hearth
- 12:: Hood
- 12a:: Circumferential wall portion
- 12b:: Ceiling portion
- 13:: Burner
- 14:: Rail
- 15:: Wheel
- 17:: Water sealing means
- 18:: Charging hole
- 19:: Discharging hole
- 20:: Raw material pre-processing unit
- 21:: exhaust air duct
- 22:: Dust collector
- 23:: Chimney
- 30,31:: Control device
- 32:: Optimal furnace temperature calculating unit
- 33:: Temperature adjusting unit
- 34, 35:: Necessary heat amount calculating unit
- 36:: Fuel adjusting unit
- 37:: Thermocouple
- 38:: Flow regulating valve
- 39:: Flow meter
- 40:: Load cell
- B:: Briquette

## Claims

1. A method of setting the temperature of a continuous heating furnace which heats a raw material loaded on a moving hearth using a burner and performs a reduction treatment, comprising the steps of:
calculating a time function α = f(t) of a metallization rate α and a time function β = g(t) of a carbon content rate β of the raw material, using a furnace temperature T of the continuous heating furnace and an initial carbon content rate β^{IN} of the raw material charged to the continuous heating furnace as parameters;
dividing a space from a charging hole to a discharge hole of the continuous heating furnace into first to m-th zones (m is a natural number), assuming a furnace temperature Tᵢ (i = 1, ..., m) for each of the zones, and forming a plurality of furnace temperature patterns including the furnace temperature T₁ of the first zone to the furnace temperature Tₘ of the m-th zone;
calculating a metallization rate α1^{OUT} and a carbon content rate β1^{OUT} at the exit of the first zone, using the metallization rate α^{IN} of the raw material and the initial carbon content rate β^{IN} of the raw material when the raw material is charged as a metallization rate α1^{IN} and a carbon content rate β1^{IN} at an entrance to the first zone, and the time functions α = f(t) and β = g(t) at the furnace temperature T₁ of the first zone, and calculating a metallization rate α^{OUT} and a carbon content rate βi^{OUT} at the exit of an i-th zone, using a metallization rate αi-1^{OUT} and a carbon content rate βi-1^{OUT} at the exit of an (i-1)-th zone (i = 2, ..., m) as a metallization rate αi^{IN} and a carbon content rate βi^{IN} at an entrance to the i-th zone, and the time functions α = f(t) and β = g(t) at the furnace temperature Tᵢ of the i-th zone, thereby calculating the metallization rate α^{OUT} at the discharge hole for each of the furnace temperature patterns; and
calculating the necessary amounts of heat applied to the continuous heating furnace for the furnace temperature patterns in which the calculated metallization rate α^{OUT} is greater than or equal to a target value, and setting the furnace temperature pattern among the calculated necessary amounts of heat applied which realizes the minimum necessary amount of heat applied as an optimal furnace temperature pattern.

2. The method of setting the temperature of the continuous heating furnace according to claim 1,
wherein a relational expression β = h(α) between the metallization rate α and the carbon content rate β of the raw material is calculated using the furnace temperature T of the continuous heating furnace and the initial carbon content rate β^{IN} of the raw material charged to the continuous heating furnace as the parameters,
when the furnace temperature Tᵢ₋₁ of the (i-1)-th zone is different from the furnace temperature Tᵢ of the i-th zone, the relational expression β = h(α) at the furnace temperature Tᵢ which satisfies the relationship between the metallization rate αi^{IN} and the carbon content rate βi^{IN} at the entrance to the i-th zone is selected,
the initial carbon content rate βi^{IN} of the relational expression β = h(α) is calculated,
the time functions α = f(t) and β = g(t) satisfying the calculated initial carbon content rate βi^{IN} and the furnace temperature Tᵢ are selected, and
the metallization rate αi^{OUT} and the carbon content rate βi^{OUT} at the exit of the i-th zone are calculated.

3. A method of controlling the temperature of a continuous heating furnace, comprising a step of:
controlling a fuel supplied to a burner of the continuous heating furnace based on the optimal furnace temperature pattern obtained by the method of setting the temperature of the continuous heating furnace according to claim 1.

4. A method of controlling the temperature of a continuous heating furnace, comprising a step of:
controlling a fuel supplied to a burner of the continuous heating furnace based on the optimal furnace temperature pattern obtained by the method of setting the temperature of the continuous heating furnace according to claim 2.

5. The method of controlling the temperature of the continuous heating furnace according to claim 3,
wherein the mass of a raw material charged to the continuous heating furnace is measured,
the position of the raw material in the continuous heating furnace is tracked, and
the fuel supplied to the burner which is close to the tracked position is corrected based on the mass of the raw material.
